# EUROPEAN PATENT APPLICATION

(11) **EP 2 773 066 A1**
(43) Date of publication of application: **03.09.2014**
(21) Application number: 13157096.2
(22) Date of filing: 28.02.2013
(51) Int. Cl.: H04L 12/24, H04W 76/00, H04L 12/911

(54) **Traffic management in communication networks**

(71) Applicant: ALCATEL LUCENT, 92100 Boulogne-Billancourt (FR)
(72) Inventor: Kp, Jeyachandran, 600042 Chennai (IN)
(74) Representative: Sciaux, Edmond

(57) **Abstract**

The present subject matter discloses systems and methods for traffic management in communication networks. In one implementation, the method comprises determining a network impact situation based on at least one impact parameter, retrieving a bandwidth profile on determining the network impact situation and allocating available network resources to at least one subscriber of a service provider of the communication network based on the bandwidth profile.

## Description

### FIELD OF INVENTION

The present subject matter relates to communication networks and, particularly but not exclusively, to traffic management in communication networks.

### BACKGROUND

Communication networks have an important role in facilitating information and communication access over large geographic regions. The resources, such as bandwidth, of communication networks are typically shared by many users or subscribers. Each of the subscribers usually subscribe to a service provider to avail a certain portion of the resources, such as bandwidth of the communication network, for example, by paying a subscription fee. Usually the service providers of communication network classify subscribers into various groups. For example, the service providers may classify a set of subscribers as premium subscribers who pay a high subscription and to whom resources may be made available on a priority. Further, the service providers may also classify the subscribers as residential users; industrial users; educational institutes; financial institutions, administrative bodies, such as the police, the fire station, and the medication facilities based on the type of subscription availed by each of them. For example, the education institutes may avail of a free or low cost plan with low data transfer and data usage cap; whereas the financial institutions may opt for a plan which guarantees high data transfer rate, minimum downtime, and secure connection.

Typically, a service provider provides each of the subscribers assured bandwidth defined in form of committed information rate (CIR), excess information rate (EIR), or peak information rate (PIR). The CIR refers to the average bandwidth for a subscriber guaranteed by the service provider under normal working conditions. Usually the service provider attempts to ensure that at any given time, the bandwidth available to each of the subscriber does not fall below the subscriber's CIR. The CIR is usually expressed in kilobits per second (kbit/s) or megabits per second (Mbps). In case, there is excess bandwidth available with the service provider, an allowance of burstable bandwidth, referred to as the EIR or PIR, above the CIR, is often provided to each of the subscribers. Usually the service provider guarantees that that the service provider will always support the CIR rate, and may sometimes provide the EIR or the PIR based on availability of the network.

However, occasionally the service providers, due to natural calamities, failure in communication equipments, scheduled maintenance and upgradation activities, may not be able to support the requisite bandwidth for providing the CIR to each of the subscribers. In such scenarios, all or some of the subscribers may be provided with zero or reduced bandwidth.

### SUMMARY

This summary is provided to introduce concepts related to traffic management in communication networks. This summary is not intended to identify essential features of the claimed subject matter nor is it intended for use in determining or limiting the scope of the claimed subject matter.

In an embodiment, a method for traffic management in communication networks comprises determining a network impact situation based on at least one impact parameter, retrieving a bandwidth profile on determining the network impact situation, and allocating available network resources to at least one subscriber of a service provider of the communication network based on the bandwidth profile.

In accordance with another embodiment of the present subject matter, a system for traffic management in communication networks comprises a processor and a memory coupled to the processor, wherein the memory comprises a network condition determination module (NCDM) configured to determine a network impact situation based on at least one impact parameter and compute available active network resources on determining the network impact situation. The system further comprises a bandwidth allocation module configured to retrieve a bandwidth profile on determination of the network impact situation, and allocate the available network resources to at least one subscriber of a service provider of the communication network based in part on the retrieved bandwidth profile and the available active network resources.

In accordance with another embodiment of the present subject matter, a computer readable medium has a set of computer readable instructions that, when executed, perform acts including determining a network impact situation based on at least one impact parameter, retrieving a bandwidth profile on determining the network impact situation, and allocating network resources to at least one subscriber of a service provider of the communication network based on the bandwidth profile.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates a network environment implementation of a communication control system, in accordance with an embodiment of the present subject matter.

Figure 2 illustrates an exemplary communication control system, in accordance with an embodiment of the present subject matter.

Figure 3 illustrates an exemplary method for traffic management in communication networks, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

Systems and methods for traffic management in communication networks are described. The systems and methods can be implemented in a variety of communication networks. Examples of such communication networks include Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), IP-based network, Public Switched Telephone Network (PSTN), Integrated Services Digital Network (ISDN), networks that use a variety of protocols, for example, Hypertext Transfer Protocol (HTTP), Transmission Control Protocol/Internet Protocol (TCP/IP), Wireless Application Protocol (WAP).

Conventionally, the service providers have a plurality of subscribers, who subscribe to a certain plan of the service provider. At the time of registering a subscriber, the service provider may collect various subscriber details from the subscriber. Generally, the subscriber details may include personal details of the subscriber, such as name, address, primary occupation, gender, age, proof of identity, proof of residence, and primary intent of using the subscription. The subscriber details may be provided as a user input to one or more computing systems of the service provider, during the registration of the subscriber. For example, some subscribers may intend to use the subscription for personal usage, such as checking e-mails, watching videos, and web surfing; whereas other subscribers may intend to use the subscription for carrying out their business or professional duties. Based on the subscriber details, the service provider may also provide customized plans for the subscriber. The plan includes the bandwidth that will be available to each of the plurality of subscribers in terms of CIR, and/or EIR; the data usage based cap or time based cap of the subscriber, the fair usage policy applicable to the each subscriber, the excess charges applicable for the subscriber on exceeding the data usage based cap or time based cap, and so on. Generally, the service provider aims to provide the CIR and, based on availability of excess bandwidth, EIR, to the subscribers under normal working conditions. However, in certain situations, henceforth referred to as network impact situations, the available bandwidth of the communication network may not be available to the subscribers.

For example, network impact situations may comprise natural calamities, such as earthquake, tsunami, and flood; scheduled maintenance, repair, and upgradation activities; unforeseen damage or fault detected in network equipments, and so on. These may involve some or all components of the communication network functioning at a reduced capacity or being nonfunctional.

Consider a typical communication network including components, such as at least one core box, a plurality of aggregation boxes and a plurality of digital subscriber line access multiplexers (DSLAMs). The DSLAM is a network device, usually located in the exchanges of the service provider and is configured to connect multiple customer digital subscriber line (DSL) interfaces to a high-speed digital communications channel using multiplexing techniques. Usually under normal working conditions, all the components of the communication network are expected to work at their planned capacities. However, in the case of occurrence of above mentioned network impact situations, one or more components of the communication network may not function at the planned capacity. As a result, the service provider may not be able to provide the CIR to all the subscribers. For example, certain subscribers may experience zero connectivity, whereas other subscribers may face reduced speed and/or quality of service.

The impact of zero connectivity or reduced connectivity for a certain time interval, say a few hours, may differ across the various groups of the subscribers. For example, the residential subscribers may not be very adversely affected if they experience zero connectivity or reduced connectivity for a certain time interval, whereas a financial institution may suffer huge losses if they experience zero connectivity or reduced connectivity for a certain time interval, especially during business hours. In another example, if at the time of a natural calamity or disaster, the administrative bodies experience zero connectivity for a certain time interval, it may adversely impact rescue operations. Further, there may be a premier group of subscribers, who may wish to avail of the CIR at all times, in return of higher charge.

Conventionally any subscriber classified in any of the groups may get disconnected in random, during network impact situations. The conventional techniques, adopted by service providers, to manage communication network in cases of network impact situations do not take into consideration the impact of zero or reduced connectivity on the subscriber.

The present subject matter pertains to traffic management in communication networks. The present subject matter describes systems and methods for ensuring connectivity to the communication network to specific group of subscribers, during network impact situations, based on at least one of plan availed by the subscriber, nature of business of the subscriber, and possible administrative functions of the subscriber.

In one implementation, a bandwidth control system may be incorporated in any of the components of the communication network, such as an aggregation box, a core box, and a DSLAM, so as to facilitate traffic management in the communication network.

In one implementation, the bandwidth control system may define multiple bandwidth profiles. A bandwidth profile may be understood to be comprising the CIR, EIR, committed burst size (CBS), excess burst size (EBS) for each of the subscribers of the service provider of the communication network. In various embodiments, the bandwidth profiles may be defined in the form of hardware, software application tools, firmware or a combination thereof. The bandwidth profile may define CIR, and EIR for each group of the subscribers either as an absolute value or as a percentage or fraction of the available network resources. In accordance with one embodiment of the subject matter, the different types of the bandwidth profiles may be activated for the different groups of subscriber during the various network impact situations. The bandwidth profiles are defined, such that when the respective bandwidth profiles are activated for the different groups of subscribers during the network impact situations, the impact of the situation occurs in accordance with factors, such as the plan availed by the subscriber, nature of business of the subscriber, and possible administrative functions of the subscriber.

Accordingly, the multiple bandwidth profiles to be activated for the different groups of subscribers during the network impact situations are defined by the bandwidth control system. For example, a primary or default bandwidth profile may be defined for being operational, i.e., active, under normal working conditions. In said primary bandwidth profile, each of the subscribers may be provided with the CIR, and EIR allocated to the subscriber, in accordance with their subscription, under the normal working of the network, i.e., when no network impact situations occur. A second bandwidth profile may be defined for being operational during planned network impact situations, such as scheduled or planned maintenance, upgradation, and repair activities, when some or all of the components of the communication network may be functional at reduced capacity; or certain components may be non-functional. For example, the second bandwidth profile may be activated to provide the CIR, and the EIR to some groups of subscribers, such as the financial institutions and the premier group of subscribers during the planned network impact situations, whereas other groups of subscribers, such as the residential users, may be provided with reduced data transfer rate than the CIR or even zero data transfer rate. Further, a third bandwidth profile may be defined for activation for subscribers, such as administrative, governmental bodies during unplanned or emergency network impact situations, such as natural calamities, wherein all the available bandwidth may be provided to such subscribers, for example, to facilitate rescue operations.

Thus the bandwidth control system, as described in the present subject matter, facilitates management of traffic in communication networks as per the defined bandwidth profile. The bandwidth control system defines bandwidth profiles, in accordance with factors, such as the plan availed by the subscriber and functions of the subscriber, and activates the appropriate bandwidth profiles for the different groups of subscribers upon occurrence of the network impact situations.

The above methods and system are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" is used throughout for clarity of the description and can include either a direct connection or an indirect connection.

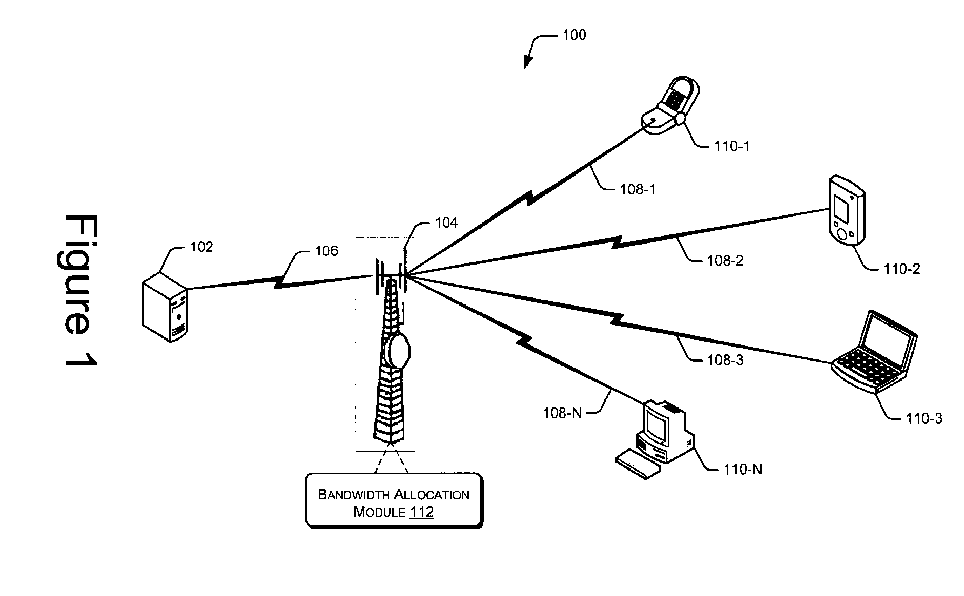

Figure 1 illustrates a system for traffic management in communication networks in a communication network environment 100, in accordance with an embodiment of the present subject matter. In one embodiment, the communication network environment 100 includes a core network system 102, configured to manage one or more communication control system (CCS), such as the CCS 104. The core network system 102 controls and communicates with the CCS 104 using communication links, such as communication link 106. Further the core network system 102 may be implemented as a network server, a server, a workstation, a mainframe computer, and the like. In one implementation, the core network system 102 is configured to control the CCS 104 connected to the core network system 102. The CCS 104 may be further configured to manage resources of the communication network and communicate control signals to and from the core network system 102. In various embodiments, the CCS 104 may be implemented as a network server, a server, a workstation, a mainframe computer, a network access station, and the like.

The CCS 104 communicate via communication channels, such as communication channels 108-1, 108-2, 108-3, ... 108-N, with various user equipments, such as user equipments (UE) 110-1, 110-2, 110-3, .. 110-N. In one embodiment, illustrated in Figure.1, communication channels 108 are radio channels. The UE 110 may include communication devices, such as a mobile phone 110-1, a personal digital assistant 110-2, a laptop computer 110-3, and a workstation 110-N. The UE 110 may also include a desktop computer, a notebook, a smart phone, a network adapter, a data card, a radio receiver unit. Further the UE 110 may be also include various dedicated machine to machine devices, which transmit data to a central server, not shown in figure, through the CCS 104.

In other embodiments, the communication link 106 and the communication channels 108 may be implemented as a local wire network, which may utilize copper lines, for example, lines made of copper unshielded twisted pair (UTP), and these copper lines extend from the service provider's end to each subscriber. In another example, the communication link 106 and the communication channels 108 may use the Digital Subscriber Line (DSL) technology to provide digital data transmission over the copper lines, and is referred to as a DSL network.

An exemplary DSL network usually comprises a multi-level distribution networks to connect the UEs 110, which are generally located at a subscriber's end, to a terminal at the service provider's end. Such a multi-level distribution network may comprise a core network, multiple sub-core or aggregate networks driven by the core network, and several access networks connected to the aggregate networks. The core network is generally the central part of the DSL network and provides various services to the UEs 110 that are connected to the service provider through the DSL network.

Yet in another example, the communication link 106 and the communication channels 108 may be implemented using optic fiber lines in the core network and the aggregate networks to provide connectivity to the UEs 110. Further, one or more access node sites are generally set-up in each access network and each access node site is provided with a Digital Subscriber Line Access Multiplexer (DSLAM) unit. The DSLAM unit at the access node site is connected to the UEs 110 through copper lines and is configured to drive data through the copper lines and to the UEs 110.

The UEs 110 are used by the subscribers to access the resources provided by the CCS 104 and/or the core network system 102. Generally the subscribers are classified into a plurality of subscriber groups based on subscriber classification parameter(s). For example, in one implementation, a group of subscribers may be classified as premium subscribers who pay a high subscription and to whom resources may be made available on a priority basis. Further, the service providers may also classify the subscribers as residential users; industrial users; educational institutes; financial institutions; administrative bodies, such as the police, the fire station, and the medication facilities based on the type of subscription availed by each of them or the primary occupation of the subscribers. In one example, say the education institutes may avail of a free or low cost plan with low data transfer rate and data usage cap; whereas the financial institutions may opt for a plan which guarantees high data transfer rate, minimum downtime, and a secure connection. The subscribers usually share the resources provided by the service provider.

However, in certain cases, referred to as network impact situation, the network resources of the service provider may be adversely affected. Examples of network impact situations may include natural calamities, such as earthquake, tsunami, and flood; scheduled maintenance, repair, and upgradation activities; unforeseen damage or fault detected in network equipments, and so on, where some or all components of the communication network function at a reduced capacity or are rendered nonfunctional. In such situations, the subscribers may not experience the quality of service subscribed by them. For example, some of the subscribers may experience slow connectivity or no connectivity at all. As mentioned earlier, the impact of reduced or no connectivity has a different impact on each of the subscriber group.

In one implementation, the CCS 104 may be configured to identify a network impact situation based on at least one impact parameter. In one implementation, examples of the impact parameter may include uplink/downlink speed between the core network system 102 and the CCS 104, uplink/downlink speed between the CCS 104 and the UEs 110, ping time, operational status of various the CCS 104 and the core network systems 102, percentage of dropped packets, network throughput and so on. In another implementation, an executive of the service provider may provide the CCS 104 with an input depicting a network impact situation.

Under normal operating conditions, a first or primary bandwidth profile may be in operation, i.e., active. On determining a network impact situation, a bandwidth allocation module 112, of the CCS 104, may be configured to retrieve a bandwidth profile based on the category of the network impact situation and implement the same. For example, if the network impact situation is a planned maintenance activity, the bandwidth allocation module 112 may devote the available bandwidth to high priority subscribers based on a second bandwidth profile; whereas if the network impact situation is natural calamity, based on a third bandwidth profile, the bandwidth allocation module 112 may devote all the available bandwidth to government agencies and rescue operators.

For example, say in case of a planned maintenance activity, based on the second bandwidth profile, a subscriber which is identified as an educational institute, based on the subscriber details, may experience reduced data transfer rate, or no connectivity. However, a subscriber identified as a financial institution, may be provided with the CIR as reduced data transfer rate may impact the operations of the financial institution adversely.

In another example, if the planned maintenance activity is taking place at non business hours, the subscribers identified as residential users may be provided with the CIR, whereas the subscribers identified to be active only during business hours, for example, offices, may experience reduced data transfer rate, or no connectivity. Thus, the impact of reduced network connectivity on the subscribers is reduced.

Thus the CCS 104, as described in the present subject matter, facilitates management of traffic in communication networks as per the defined bandwidth profile. Further, it should be appreciated by those skilled in the art that the functionalities of the functionalities of the CCS 104 may be also implemented in the core network system 102.

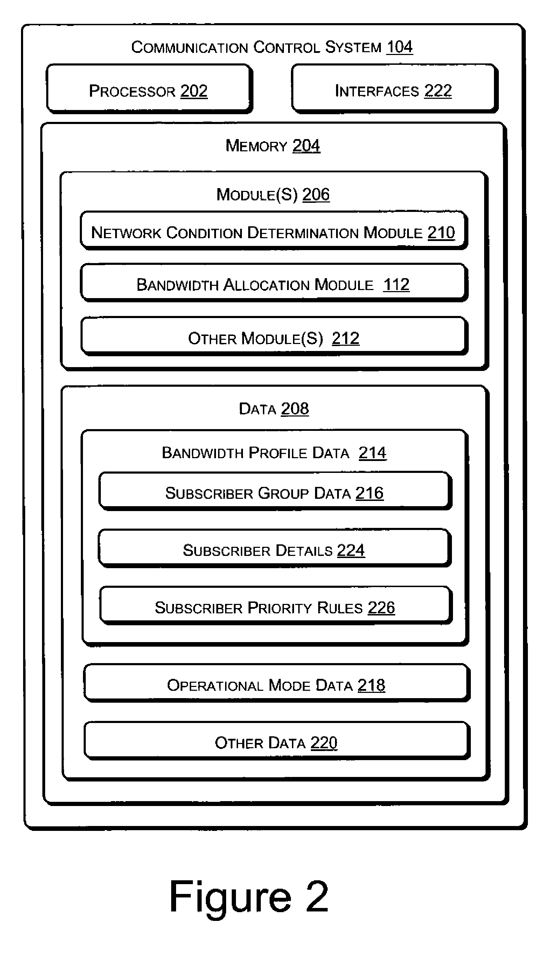

Figure 2 illustrates the exemplary components of the CCS 104, in accordance with an embodiment of the present subject matter. In one embodiment, the CCS 104 includes one or more processor(s) 202, hence forth referred to as processor 202, and a memory 204 connected to the processor 202. The processor 202 may include microprocessors, microcomputers, microcontrollers, digital signal processors, central processing units, state machines, logic circuitries and/or any other devices that manipulate signals and data based on operational instructions. The processor 202 can be a single processing unit or a number of units, all of which could also include multiple computing units. Among other capabilities, the processor 202 is configured to fetch and execute computer-readable instructions stored in the memory 204.

Functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory 204 can include any computer-readable medium known in the art including, for example, volatile memory, such as RAM and/or non-volatile memory, such as flash. The memory 204 further includes module(s) 206 and data 208. The module(s) 206 include routines, programs, objects, components, data structures, etc., which perform particular tasks or implement particular abstract data types. The module(s) 206 further include a network condition determination module (NCDM) 210, the bandwidth allocation module 112 and other module(s) 212. The other module(s) 212 may include programs or coded instructions that supplement applications and functions of the CCS 104.

On the other hand, the data 208, amongst other things, serves as a repository for storing data processed, received, associated and generated by one or more of the module(s) 206. The data 208 includes, for example, bandwidth profile data 214, operational mode data 218, and other data 220. The other data 220 includes data generated as a result of the execution of one or more modules in the other module(s) 212.

Further the CCS 104 includes one or more interface(s) 222. The interface(s) 222 may include a variety of software and hardware interfaces, for example, interfaces for peripheral device(s), such as data input output devices, referred to as I/O devices, storage devices, network devices, etc. The I/O device(s) may include Universal Serial Bus (USB) ports, Ethernet ports, host bus adaptors, etc., and their corresponding device drivers. The interface(s) 222 facilitate the communication of the CCS 104 with various network entities, and various communication and computing devices, such as the UEs 110.

In one implementation, the NCDM 210 may be configured to determine the availability of network resources and operational status of various components of the network at regular time intervals. In another example, the NCDM 210 may be configured to determine the availability of network resources and operational status of various components of the network on detection of a network impact situation. For example, the NCDM 210 may determine various impact parameters, for example, the upload/ download speed, ping time, percentage of dropped packets, network throughput, operational state of various components of the network, etc., to detect a network impact situation. For example, say the NCDM 210 detects that the packet loss at a DSLAM is high. In such a scenario, the NCDM 210 may presume that the said DSLAM is not operating as planned, i.e., malfunctioning. In another scenario, the NCDM 210 may determine that a substantial portion of the components of the network from a particular region are not responding to say, ping requests. In such a scenario, the NCDM 210 may presume a calamity at the particular region. In another embodiment, the NCDM 210 may be configured to determine a network impact situation based on user input. In one implementation, the NCDM 210 may store the operational state of the various components of the network as the operational mode data 218. In addition to determining a network impact situation, the NCDM 210 may also assign a category to the network impact situation, for example, natural calamity, planned maintenance activity, unexpected equipment failure, and so on. In another implementation, the NCDM 210 may be configured to receive a user input depicting a network impact situation and its category.

Based on the category of the network impact situation and its impact on the resources of the network, the bandwidth allocation module 112 may be configured to retrieve a bandwidth profile from the bandwidth profile data 214. The bandwidth profile may be indicative of the CIR, EIR, and PIR to be provided to each of the subscribers in case of a said category of network impact situation. In another example, the bandwidth profile may be indicative of the resources to be provided to each of the subscribers as a percentage or fraction of the available active resources of the network during the network impact situation. As mentioned earlier, the subscribers may be categorized into a plurality of subscriber groups. In one implementation, subscriber details pertaining to each of the plurality of subscriber groups may be stored as subscriber group data 216. The subscriber details may include the subscription plan availed by the user, the category of the subscriber, and so on. The bandwidth allocation module 112 may determine the category of each subscriber and allocate the CIR, EIR and PIR to the each subscriber based on the category of the each subscriber and the retrieved bandwidth profile.

In one embodiment, based on the available active resources of the network during the network impact situation, the bandwidth allocation module 112 may, based on subscriber priority rules 226, provide resources to subscribers within a subscriber group. The subscriber priority rules 226 may be understood to be pre-defined rules defining priority of subscribers based in part on subscriber details, which may be saved as subscriber details 224. The subscriber details 224 may be understood to include personal details of the subscriber, such as name, address, primary occupation, gender, age, proof of identity, proof of residence, and primary intent of using the subscription. In one implementation, the subscriber details 224 may be provided as a user input to the CCS 104, during the registration of the subscriber. For example, say there are ten financial institutions, and the available active resources may be able to cater to only two financial institutions. In such a scenario, based on subscriber priority rules, the bandwidth allocation module 112 may select the financial institutions to whom the network resources may be provided. For example, the bandwidth allocation module 112 may allocate resources to the financial institutions which have a premier subscription plan, or the financial institutions which have a higher volume of transactions or so on. In another example, the bandwidth allocation module 112 may divide the available active resources to all the subscribers within a subscriber group equally. In yet another implementation, the bandwidth allocation module 112 may be configured to allocate the available active resources to all the subscribers within a subscriber group on a round-robin basis.

As mentioned earlier, the NCDM 210 may be configured to determine the availability of network resources and operational status of various components of the network at regular time intervals. On determining restoration of normal operating conditions and full availability of network resources, the bandwidth allocation module 112 may implement the default bandwidth profile, wherein each subscriber is provided with the CIR, EIR and PIR for which the each subscriber has purchased a subscription from the service provider.

Thus, the CCS 104 reduces impact of network outrages and network connectivity issues on subscribers leading to better user experience of the subscribers and enhancing customer satisfaction.

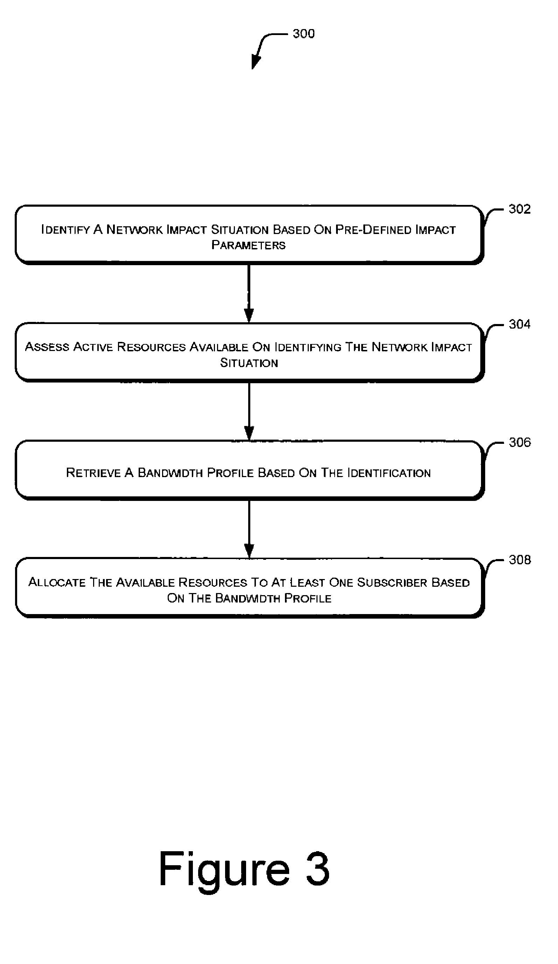

Figure 3 illustrates an exemplary method 300 for traffic management in communication networks, in accordance with an embodiment of the present subject matter. Although the method 300 as described in Figure 3 is described for traffic management in communication networks, it will be understood that the same should not be construed as a limitation without deviating from the scope of the present subject matter.

The order in which the method 300 is described is not intended to be construed as a limitation, and any number of the described method blocks can be combined in any order to implement the method 300, or alternative methods. Additionally, individual blocks may be deleted from the method 300 without departing from the spirit and scope of the subject matter described herein. Furthermore, the method 300 can be implemented in any suitable hardware, software, firmware, or combination thereof.

A person skilled in the art will readily recognize that steps of the method 300 can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described methods. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary method.

As depicted in block 302, a network impact situation is identified based on pre-defined impact parameters. In one implementation, the NCDM 210 may determine various impact parameters, such as the upload/download speed, ping time, percentage of dropped packets, network throughput, and the operational state of various components of the network, at regular intervals to identify a network impact situation and the category of the network impact situation.

At block 304, an assessment is done to determine the active resources of the network available during a network impact situation. In one implementation, the NCDM 210 may ascertain the operational status of various components of the network and determine the active resources of the network available during a network impact situation.

As illustrated in block 306, a bandwidth profile is retrieved based on the category of the network impact situation. In one implementation, the bandwidth allocation module 112 may retrieve a bandwidth profile based on the category of the network impact situation. For example, the bandwidth allocation module 112 may retrieve a first bandwidth profile in case of a natural calamity, a second bandwidth profile in case of scheduled maintenance and upgradation activity and so on.

As shown in block 308, the available active network resources are allocated to one or more subscribers based on the retrieved bandwidth profile. In one implementation, the bandwidth allocation module 112 implements the bandwidth profile and provides each subscriber with the CIR, EIR, and PIR mentioned in the bandwidth profile.

Although implementations for traffic management in communication networks have been described in language specific to structural features and/or methods, it is to be understood that the appended claims are not necessarily limited to the specific features or methods described. Rather, the specific features and methods are disclosed as exemplary implementations for traffic management in communication networks.

## Claims

1. A computer implemented method for traffic management in a communication network, the method comprising:
determining a network impact situation based on at least one impact parameter;
retrieving a bandwidth profile on the determining of the network impact situation;
and
allocating available network resources to at least one subscriber of a service provider of the communication network based on the bandwidth profile.

2. The method as claimed in claim 1, wherein the determining further comprises identifying at least one category of the network impact situation based on the at least one impact parameter.

3. The method as claimed in claim 2, wherein the retrieving is based on the at least one category of the network impact situation.

4. The method as claimed in claim 1, wherein the allocating is further based on a category of the at least one subscriber.

5. The method as claimed in claim 4, wherein the method further comprises determining the category of the at least one subscriber based on subscription details comprising at least one of a subscription plan availed by the at least one subscriber, and a primary occupation of the at least one subscriber.

6. The method as claimed in claim 1, wherein the method further comprises:
computing available resources of the communication network during the network impact situation; and
determining the available network resources for allocation based on the computing.

7. The method as claimed in claim 1, wherein the at least one impact parameter comprises at least one of a uplink speed, a downlink speed, a ping time, an operational status of at least one component of the communication network, a percentage of dropped packets, and a throughput of the communication network.

8. The method as claimed in claim 1, wherein the allocating further comprises prioritizing the available network resources in accordance with at least one subscriber priority rule, wherein the at least one subscriber priority rule is based on subscriber details.

9. A communication control system (104) comprising:
a processor (202); and
a memory (204) coupled to the processor (202), the memory (204) comprising,
a network condition determination module (NCDM) (210) configured to:
determine a network impact situation based on at least one impact parameter;
compute available active network resources on determining the network impact situation;
a bandwidth allocation module (112) configured to:
retrieve a bandwidth profile on determination of the network impact situation; and
allocate the available active network resources to at least one subscriber of a service provider of the communication network based in part on the retrieved bandwidth profile and the available active network resources.

10. The communication control system (104) as claimed in claim 9 further comprising bandwidth profile data (214) configured to store a plurality of bandwidth profiles; wherein each bandwidth profile includes at least one of a committed information rate (CIR) allocated to the at least one subscriber, an excess information rate (EIR) allocated to the at least one subscriber, and a peak information rate (PIR) allocated to the at least one subscriber, based in part on a category of the at least one subscriber.

11. The communication control system (104) as claimed in claim 9, wherein the bandwidth allocation module (112) is further configured to:
determine a category of the at least one subscriber based on at least one of a subscription plan availed by the at least one subscriber, and subscriber details (224); and
allocate the available active network resources to at least one subscriber of a service provider of the communication network based in part on the category of the at least one subscriber.

12. The communication control system (104) as claimed in claim 9, wherein the NCDM (210) is further configured to identify at least one category of the network impact situation based on the at least one impact parameter.

13. The communication control system (104) as claimed in claim 9, wherein the NCDM (2 10) is further configured to:
ascertain a termination of the network impact situation; and
allocate the available active network resources to the at least one subscriber based on a primary bandwidth profile.

14. A computer-readable medium having embodied thereon a computer program for executing a method comprising:
determining a network impact situation based on at least one impact parameter;
retrieving a bandwidth profile on determining the network impact situation; and
allocating available network resources to at least one subscriber of a service provider of the communication network based on the bandwidth profile.
